# EUROPÄISCHE PATENTSCHRIFT

(11) **EP 1 655 504 B1**
(45) Veröffentlichungstag und Bekanntmachung des Hinweises auf die Patenterteilung: **09.04.2008**
(21) Anmeldenummer: 05021249.7
(22) Anmeldetag: 29.09.2005
(51) Int. Cl.: F16D 23/06

(54) **Schaltvorrichtung für ein synchronisiertes Gangwechselgetriebe**
Gear-shifting device for a synchronised gear transmission
Système de changement de vitesses pour une boîte de transmission synchronisée

(30) Priorität: 04.11.2004 DE 102004053213
(43) Veröffentlichungstag der Anmeldung: 10.05.2006
(73) Patentinhaber: Dr.Ing. h.c. F. Porsche Aktiengesellschaft, 70435 Stuttgart (DE)
(72) Erfinder: Böger, Thorsten, 75446 Wiernsheim (DE)

(56) Entgegenhaltungen:
- DE-C1- 4 404 093
- DE-C1- 10 136 429

## Beschreibung

Die Erfindung betrifft eine Schaltvorrichtung für ein synchronisiertes Gangwechselgetriebe gemäß den Merkmalen des Oberbegriffs des Patentanspruchs 1.

Aus der DE 44 04 093 C2 ist eine gattungsgemäße Schaltsynchronisierung dargestellt und beschrieben, bei der zur Unterbindung von sog. Schaltkratzen bei der Synchronisierung des Gangszahnrades vorgeschlagen wird, zwei nacheinander angeordnete und durch Übertrittskanten voneinander getrennte Ausnehmungen in der Innenumfangsfläche der Schaltmuffe vorzusehen. Diese beiden Ausnehmungen wirken beim Verschieben der Schaltmuffe mit einer federbelasteten Kugel zusammen, die -in einem Sperrstein fixiert- im Synchronkörper aufgenommen ist. Mit der sich unmittelbar an die erste Ausnehmung anschließenden zweiten Ausnehmung wird über die federbelastete Kugel eine zweite Kraftspitze erzeugt, mit der eine entsprechende Nachsynchronisierung erreichbar ist.

Aufgabe der Erfindung ist es, die Vor- und Nachsynchronisierung für ein synchronisiertes Schaltgetriebe weiter zu verbessern.

Die Aufgabe wird durch die im Anspruch 1 angegebenen Merkmale gelöst.

Durch die radial und axial versetzt in der Innenumfangsfläche der Schaltmuffe angeordneten Ausnehmungen ist auf vorteilhafte Art und Weise eine größere Freiheit bei der geometrischen Gestaltung der Ausnehmungen bzw. der mit den Ausnehmungen zusammenwirkenden Kugelkörpern erreichbar. Damit können die für eine optimale Vor- und Nachsynchronisierung erforderlichen axialen Überschiebekräfte mit unterschiedlich hohen Kraftspitzen erzeugt werden.

Durch die in den Unteransprüchen angegebenen Merkmale sind weitere vorteilhafte Ausgestaltungen und Weiterbildungen der Schaltvorrichtung möglich.

Durch eine unterschiedliche geometrische Ausbildung der ersten und zweiten Ausnehmungen bzw. der mit den Ausnehmungen zusammen wirkenden federbelasteten Kugeln sind für die Vor- und Nachsynchronisierung erforderliche optimale Überschiebekräfte erzeugbar.

Neben der unterschiedlichen geometrischen Ausbildung der Ausnehmungen und/oder der Kugeln kann durch unterschiedliche Federkennlinien ebenfalls die Überschiebekraft beeinflusst werden.

Ein Ausführungsbeispiel der Erfindung ist in der Zeichnung dargestellt und wird im nachfolgenden näher beschrieben.

### Es zeigen:

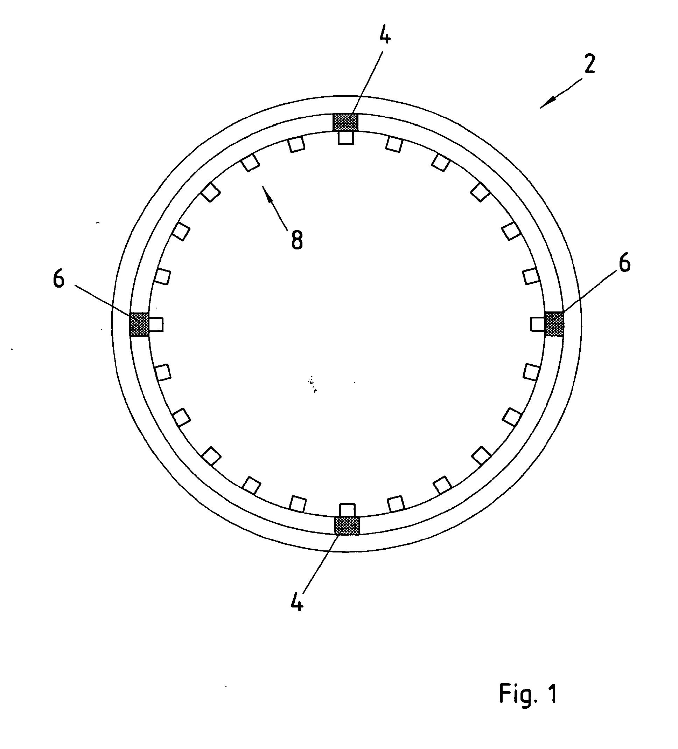

- Fig. 1: eine schematische Seitenansicht einer Schalt- bzw. Schiebemuffe einer Synchronisierungseinrichtung,
- Fig. 2-7: drei mögliche Stellungen einer Schaltmuffe und
- Fig. 8-10: die zu den drei Schaltstellungen der Schaltmuffe entsprechenden Kraft/Wege - Diagramme.

Die Schaltmuffe 2 weist im vorliegenden Ausführungsbeispiel an ihrer Innenumfangsfläche 2a jeweils zwei radial und axial versetzt zueinander angeordnete Ausnehmungen 4 und 6 auf, die zusätzlich zu der Innenverzahnung auf der Innenseite der Schiebemuffe 2 eingebracht sind. Wie bekannt und nicht näher dargestellt, ist die Schaltmuffe 2 auf einem Synchronkörper axial verschieblich gelagert und über die Innenverzahnung 8 mit einer auf dem Synchronkörper eingebrachten Außenverzahnung radial festgelegt.

In dem nicht dargestellten, die Schaltmuffe 2 tragenden Synchronkörper sind sog. Sperrsteine 10 und 12 angeordnet, in deren Öffnungen eine Kugel 14 und 16 aufgenommen ist. Die beiden Kugeln 14, 16 werden durch eine Feder 18 und 20 gegen die Innenumfangsfläche 2a der Schaltmuffe 2 gedrückt. Die beiden in der Innenumfangsfläche 2a der Schaltmuffe 2 ausgebildeten Ausnehmungen 4 und 6 sowie die in bestimmten Schaltstellungen mit den Ausnehmungen 4, 6 zusammenwirkenden Kugeln 14 und 16 sind geometrisch unterschiedlich ausgestaltet. Während im vorliegenden Ausführungsbeispiel der Durchmesser der ersten Kugel 14 größer gewählt ist, als der Durchmesser der zweiten Kugel 16, ist die erste Ausnehmung 4 keilförmig und die zweite Ausnehmung 6 trapezförmig ausgebildet. Die Größe sowie die geometrische Ausgestaltung der Ausnehmungen 4, 6 und der Kugeln 14, 16 sind natürlich an die konkret vorliegenden Anwendungsverhältnisse anpassbar; das Gleiche gilt für die Federkennraten der Federn 18, 20, die im vorliegenden Ausführungsbeispiel ebenfalls unterschiedlich hoch gewählt sind.

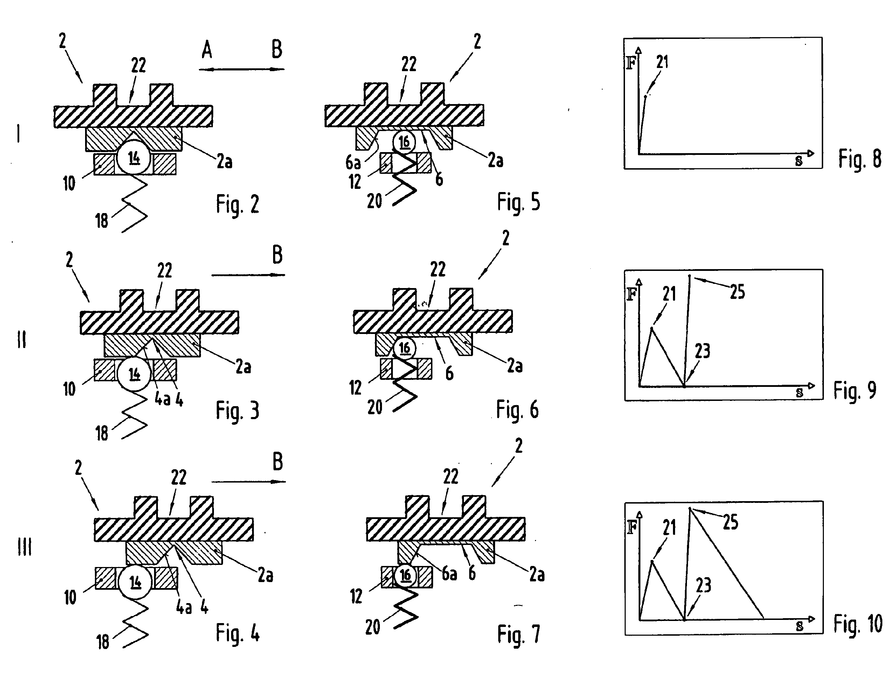

Im nachfolgenden wird der Synchronisierungsvorgang näher erläutert. In einer am Außenumfang der Schaltmuffe 2 eingebrachte Ringnut 22 greift eine nicht dargestellte Schaltgabel ein, über die eine Verschiebung der Schaltmuffe wahlweise in Richtung A oder B möglich ist. Beim Überführen der Schaltmuffe 2 von einer Schaltstellung I in eine Schaltstellung II, bei der beispielsweise die Schaltmuffe 2 in Richtung B verschoben wird, findet eine sog. Vorsynchronisierung statt, bei der über die Kugel 14 der Sperrstein 10 den Synchronring auf die Reibfläche des Gangszahnrades drückt. Diese von der eigentlichen Schaltbewegung des Fahrers unabhängige Überschiebekraft wird beim Abrollen der Kugel 14 auf der Rampe 4a der Ausnehmung 4 erzeugt und ist in Fig. 8 mit der Kraftspitze im Punkt 21 graphisch dargestellt. Durch die in axialer Richtung wirkenden Überschiebekraft wird aufgrund des rotierenden Gangszahnrades der Synchronring in seiner Lage so verdreht, dass seine Sperrzähne zu diesem Zeitpunkt ein Durchschalten der Schaltmuffe verhindern. Beim weiteren Verschieben der Schaltmuffe 2 - siehe Schaltstellung II - in deren Verlauf die eigentliche Synchronisierung, d. h. die Drehzahlangleichung von Schaltmuffe 2 und Gangzahnrad erfolgt, fällt die Überschiebekraft bis zu einem Punkt 23 ab. Beim Überführen der Schaltmuffe 2 aus Schaltstellung II in Richtung Schaltstellung III wird durch die zweite Ausnehmung 6 und die Kugel 16 beim Abrollen auf der Rampe 6a der Ausnehmung 6 eine zweite Kraftspitze (siehe Punkt 25) erzeugt, die eine nochmalige axiale Anpresskraft auf den Synchronring bewirkt, wodurch eine sog. Nachsynchronisierung stattfindet. Diese Nachsynchronisierung, an die sich das eigentliche Durchschalten der Schaltmuffe 2 anschließt, stellt sicher, dass die bereits synchronisierten Bauteile der Synchronisierungseinrichtung nicht wieder in ihren Drehzahlen auseinander laufen, sondern über einen Reibschluss angekoppelt sind, so dass danach ein kratzfreies Durchschalten möglich wird. Wie aus den Kraft - Wege - Diagrammen gemäß Fig. 8 bis 10 ersichtlich, ist die Amplitude der zweiten Kraftspitze größer gewählt, die z.B. durch eine entsprechend höhere Federkennrate der Feder 20 erzeugbar ist. In der Schaltstellung III ist ein Formschluss zwischen Synchronisierungseinheit, d. h. der Schaltmuffe 2 und dem zu schaltenden Gangzahnrad erreicht; dazu gleiten beide Kugeln 14, 16 auf der Innenumfangsfläche 2a der Schaltmuffe ab.

## Patentansprüche

1. Schaltvorrichtung für ein synchronisiertes Gangwechselgetriebe eines Kraftfahrzeuges, mit einer auf einem Synchronkörper verschiebbar gelagerten Schaltmuffe (2), die über mindestens einen Synchronring mit einem Gangzahnrad in Wirkverbindung bringbar ist, wobei zur Unterstützung des Synchronisierungsvorgangs in der Innenumfangsfläche (2a) der Schaltmuffe (2) erste und zweite Ausnehmungen (4, 6) und am Synchronkörper Sperrsteine (10, 12) mit einer federbelasteten Kugel (14, 16) vorgesehen sind, die in bestimmten Schaltstellungen in die Ausnehmungen (4, 6) eingreifen, wobei die Ausnehmungen (4, 6) seitliche Rampen (4a, 6a) aufweisen, über die in Wechselwirkung mit der Kugel (14, 16) beim Verschieben der Schaltmuffe (2) axiale Anpresskräfte auf den Synchronring mit unterschiedlich hohen Kraftspitzen erzeugbar sind, wobei für eine Vor- und Nachsynchronisierung die ersten und zweiten Ausnehmungen (4, 6) in der Innenumfangsfläche (2a) der Schaltmuffe (2) radial und axial versetzt zueinander angeordnet sind **dadurch gekennzeichnet, dass** jede der ersten und zweiten Ausnehmungen mit jeweils einer federbelasteten Kugel (14, 16) zusammenwirkt.

2. Schaltvorrichtung nach Anspruch 1, **dadurch gekennzeichnet, dass** die Geometrie der ersten und zweiten Ausnehmungen (4, 6) und/oder der Kugeln (14, 16) unterschiedlich ausgebildet ist.

3. Schaltvorrichtung nach Anspruch 1 oder 2, **dadurch gekennzeichnet, dass** die Federn (18, 20) unterschiedliche Federkennlinien aufweisen.

## Claims

1. Shift device for a synchronized change-gear transmission of a motor vehicle, having a shift sleeve (2) which is movably mounted on a synchronizing body and which can be placed in operative connection with a gear gearwheel by means of at least one synchronizing ring, wherein in order to assist the synchronizing process, first and second recesses (4, 6) are provided in the inner peripheral face (2a) of the shift sleeve (2) and stopblocks (10, 12) with a spring-loaded ball (14, 16) are provided on the synchronizing body, which balls (14, 16) engage into the recesses (4, 6) in certain shift positions, wherein the recesses (4, 6) have lateral ramps (4a, 6a), by means of which, in interaction with the balls (14, 16), axial pressing forces with different force peak magnitudes can be generated on the synchronizing ring when the shift sleeve (2) is moved, wherein the first and second recesses (4, 6) in the inner peripheral face (2a) of the shift sleeve (2) are arranged radially and axially offset with respect to one another for a pre-synchronization and post-synchronization, **characterized in that** each of the first and second recesses interacts with in each case one spring-loaded ball (14, 16).

2. Shift device according to Claim 1, **characterized in that** the geometry of the first and second recesses (4, 6) and/or of the balls (14, 16) is of different design.

3. Shift device according to Claim 1 or 2, **characterized in that** the springs (18, 20) have different spring characteristic curves.

## Revendications

1. Dispositif de changement de vitesses pour une boîte de transmission synchronisée d'un véhicule automobile, comprenant un manchon coulissant (2) monté de manière coulissante sur un corps de synchronisation, qui peut être amené en liaison fonctionnelle par le biais d'au moins une bague de synchronisation avec un pignon de vitesse, des premier et deuxième évidements (4, 6) étant prévus pour aider l'opération de synchronisation dans la surface périphérique interne (2a) du manchon coulissant (2), et des coulisseaux de blocage (10, 12) avec une bille sollicitée par ressort (14, 16) étant prévus sur le corps de synchronisation, lesquels viennent en prise dans les évidements (4, 6) dans des positions de changement de vitesses particulières, les évidements (4, 6) présentant des rampes latérales (4a, 6a) par le biais desquelles des forces de pressage axiales peuvent s'exercer sur la bague de synchronisation avec des pointes de force d'intensités différentes, en interaction avec la bille (14, 16) lors du coulissement du manchon coulissant (2), les premier et deuxième évidements (4, 6) étant disposés de manière décalée l'un par rapport à l'autre axialement et radialement pour une pré- et une post-synchronisation, dans la surface périphérique interne (2a) du manchon coulissant (2), **caractérisé en ce que** chacun des premier et deuxième évidements coopère avec une bille respective sollicitée par ressort (14, 16).

2. Dispositif de changement de vitesses selon la revendication 1, **caractérisé en ce que** la géométrie des premier et deuxième évidements (4, 6) et/ou des billes (14, 16) est réalisée différemment.

3. Dispositif de changement de vitesses selon la revendication 1 ou 2, **caractérisé en ce que** les ressorts (18, 20) présentent des caractéristiques de ressort différentes.
